# EUROPÄISCHE PATENTSCHRIFT

(11) **EP 1 402 186 B1**
(45) Veröffentlichungstag und Bekanntmachung des Hinweises auf die Patenterteilung: **28.06.2006**
(21) Anmeldenummer: 03711947.6
(22) Anmeldetag: 08.03.2003
(51) Int. Cl.: F04D 25/04, F16C 39/06

(54) **ABGASTURBOLADER**
EXHAUST GAS TURBOCHARGER
TURBOCOMPRESSEUR A GAZ D'ECHAPPEMENT

(30) Priorität: 12.04.2002 DE 10216447
(43) Veröffentlichungstag der Anmeldung: 31.03.2004
(73) Patentinhaber: Forschungszentrum Jülich GmbH, 52425 Jülich (DE); BorgWarner Inc., Auburn Hills, MI 48326-2872 (US)
(72) Erfinder: FREMEREY, Johan, K., 53127 Bonn (DE); LANG, Matthias, 02763 Zittau (DE); JAISLE, Jens-Wolf, F-56190 Billiers (FR)
(74) Vertreter: Paul, Dieter-Alfred
(86) Internationale Anmeldenummer: PCT/EP2003/002389
(87) Internationale Veröffentlichungsnummer: WO 2003/087581

(56) Entgegenhaltungen:
- WO-A-00/64031
- DE-A- 3 808 331
- DE-C- 10 005 246
- US-A- 4 620 752
- PATENT ABSTRACTS OF JAPAN vol. 008, no. 182 (M-319), 22. August 1984 (1984-08-22) & JP 59 073624 A (AISHIN SEIKI KK), 25. April 1984 (1984-04-25)

## Beschreibung

Die Erfindung betrifft einen Abgasturbolader mit einer Welle, auf der ein Turbinenrad und ein Verdichterrad sitzen und die in Radiallagern und wenigstens einem Axiallager geführt ist, die als Magnetlager ausgebildet sind, wobei das Axiallager als aktives Magnetlager mit einem Elektromagneten, einem Axialsensor und einem Regler zur Regelung des den Elektromagneten beaufschlagenden elektrischen Stroms ausgebildet ist.

Abgasturbolader dienen der Verbesserung des Wirkungsgrades und damit der Leistungssteigerung von Verbrennungsmotoren. Sie weisen eine welle auf, die einerends mit einem Turbinenrad und anderenends mit einem Verdichterrad versehen ist. Das Turbinenrad wird vom Abgasstrom des Verbrennungsmotors beaufschlagt, wobei im wesentlichen die kinetische Energie des Abgases durch das Turbinenrad in eine Drehbewegung umgesetzt wird. über die Welle wird das verdichterrad angetrieben, das Frischluft ansaugt und mit Überdruck in die Einlaßkanäle des Verbrennungsmotors einströmen läßt und damit den Füllungsgrad verbessert.

An die Lagerung der welle von Abgasturboladern werden hohe Anforderungen gestellt. Zum einen erreicht die Welle hohe Drehzahlen von bis zu 300000 U/min. Zum anderen sind der Abgasturbolader und damit dessen Lager hohen Temperaturen ausgesetzt. Ein weiteres Problem besteht darin, daß der auf das Turbinenrad auftreffende Abgasstrom starke Axialkräfte erzeugt, die in einem Axiallager aufgefangen werden müssen. Wegen der hohen Drehzahlen müssen die sich drehenden Teile des Abgasturboladers hochgenau ausgewuchtet werden, damit so wenig wie möglich Schwingungen bzw. Vibrationen erzeugt werden. Bei alledem muß zusätzlich noch darauf geachtet werden, daß der sehr breite Temperaturbereich, in dem ein Abgasturbolader arbeitet, nicht zu verspannungen der Lager aufgrund von Materialausdehnungen führt.

Als Lager für die Welle kommen bisher ausschließlich Gleit- oder Wälzlager zur praktischen Anwendung. Sie unterliegen mit Blick auf die vorgenannten Beanspruchungen erheblichem Verschleiß und sind ebenso wie deren Schmierung zu ca. 80 % für den Ausfall von Abgasturboladern verantwortlich.

Zur Lösung dieses Problems ist in der DE-C-100 05 246 vorgeschlagen, die Welle eines Abgasturboladers in Magnetlagern zu führen. Eine solche magnetische Lagerung bildet theoretisch keine obere Grenze für die Drehzahlen und zeichnet sich mangels mechanischer Reibung durch besseren Wirkungsgrad aus. Eine Magnetlagerung ist zudem wartungsfrei und bedarf keiner Schmierung. Der Abgasturbolader nach der DE-C-100 05 246 weist mehrere Radiallager und ein Axiallager auf, die sämtlich als aktive Magnetlager ausgebildet sind. Das Axiallager ist Teil eines Regelkreises und weist einen Regler zur Regelung des den Elektromagneten beaufschlagenden elektrischen Strom auf. Solche elektromagnetischen Axiallager sind im Stand der Technik an sich bekannt (vgl. US-A-5,315,197; US-A-4,620,752; WO 92/15795; US-A-5,729,065). Der Regler stellt den auf die Spule einwirkenden Strom hinsichtlich Polarität und Stärke so ein, daß die Spule ein axial auf die Welle einwirkendes Magnetfeld erzeugt, das der jeweiligen Auslenkung der Welle in axialer Richtung entgegengesetzt ist und auf diese Weise die Welle wieder in die definierte Lage zurückstellt. Dies geht so schnell, daß die Welle praktisch keine Axialbewegungen ausführt.

In der DE-A-38 08 331 ist ein Rotorlager offenbart, bei dem ein Axiallager der vorgenannten Art mit einem magnetischen Radiallager kombiniert ist, das aus Rotor- und Statormagnetringen besteht, die gegensätzlich magnetisiert sind, so daß sich in axialer Richtung ein Magnetfeld mit anziehender Wirkung aufbaut.

Die Lagerung der welle des Abgasturboladers nach der DE-A-100 05 246 Cl ist wegen der ausschließlichen verwendung von aktiven, d.h. mit Elektromagneten ausgestatteten Magnetlagern aufwendig. Eine andere Lösung ist der JP-A-59073624 zu entnehmen. Bei dem darin beschriebenen Abgasturbolader wird die welle von ausschließlich passiven, als Axial- und Radiallager ausgebildeten Magnetlagern geführt. Diese sind so polarisiert, daß sie sich jeweils gegenseitig abstoßen. Zur Unterstützung wird Preßluft in die Spalte zwischen den Magneten eingeführt. Die Magnetlagerung allein wäre nämlich nicht in der Lage, die Welle des Abgasturboladers stabil zu führen. Die Zuführung von Preßluft macht diese Lagerung außerordentlich aufwendig.

Der Erfindung liegt die Aufgabe zugrunde, die Lagerung eines Abgasturboladers so zu gestalten, daß sie möglichst verschleißarm ist, weniger störanfällig ist und nicht zu Vibrationen neigt.

Diese Aufgabe wird erfindungsgemäß dadurch gelöst, daß die Radiallager als passive Magnetlager mit axiale Magnetflüsse erzeugenden Permanentmagneten und daß das Axiallager einen radial vorstehenden Lagerring aus magnetisierbarem Material und wenigstens einen einen Axiallagerstator bildendes Joch aus ferromagnetischem Materialaufweist, das den Lagerring unter Bildung von Magnetspalten auf beiden Seiten des Lagerrings einfaßt, und daß in dem Joch axial nebeneinander wenigstens ein Paar von axial entgegengesetzt polarisierten Permanentmagneten und ferner radial benachbart als Elektromagnet eine elektromagnetische Spule angeordnet sind, wobei der Magnetfluß in der Spule und damit in den Magnetspalten über den Regler derart steuerbar ist, daß der Lagerring in dem Joch axial in einer definierten Position gehalten wird.

Aufgrund dieser Ausbildung ist die welle des Abgasturboladers vollständig magnetisch gelagert, indem die Welle schwebend in den Magnetlagern gehalten wird und keine mechanische Berührung mit feststehenden Teilen besteht und somit auch keine mechanische Reibung gegeben ist. Konkret geschieht dies dadurch, daß zumindest zwei passive Magnetlager mit einem aktiven Magnetlager kombiniert werden. Dabei können auch mehr als zwei passive und mehr als ein aktives Magnetlager vorhanden sein und aktives und passives Magnetlager eine Einheit bilden. Die passiven Magnetlager haben Permanentmagnete in dem feststehenden Teil und zweckmäßigerweise auch in dem sich drehenden Teil, die so angeordnet sind, daß in den Spalten zwischen drehenden und feststehenden Teilen ein axialer, anziehender Magnetfluß erzeugt wird, der sich einer radialen Verlagerung der Welle widersetzt. Durch Stärke, Anzahl und Anordnung der Permanentmagnete kann ein so starker Magnetfluß erzeugt werden, so daß die welle auch bei Erwirkung starker äußerer Kräfte schwebend gehalten wird. Ein Auswuchten der Welle ist nicht mehr oder zumindest nicht so aufwendig notwendig wie bei den Abgasturboladern mit mechanischer Lagerung. Dabei ist zu berücksichtigen, daß der wuchtprozeß bis zu 15 % der Herstellungskosten des Abgasturboladers ausmachen kann.

Eine weitere Besonderheit der Erfindung besteht darin, daß das Axiallager aus einer Kombination aus einem Joch, einer Spule und zwei entgegengesetzt polarisierten sowie axial nebeneinander angeordneten Permanentmagneten besteht, wobei Spule und Fermanentmagnete radial nebeneinander liegen. Auf diese Weise werden in dem Joch vier Teilmagnetflüsse ausgebildet, von denen jeweils zwei axial und zwei radial nebeneinander liegen. Zwei der Teilmagnetflüsse durchsetzen den mit der Welle verbundenen Lagerring und erzeugen in den Magnetspalten axial und entgegengesetzt gerichtete Magnetfelder. Die beiden anderen Teilmagnetflüsse durchsetzen das Joch nach außen hin. Die Magnetfelder in den Magnetspalten am Lagerring lassen sich durch Strombeaufschlagung der Spule asymmetrisch in der weise beeinflussen, daß das Magnetfeld in dem einen Magnetspalt verstärkt und in dem anderen abgeschwächt wird. Auf diese weise wird auf den Lagerring und damit die welle eine Axialkraft ausgeübt. Diese wirkt einer axialen Versetzung der welle entgegen, wobei der Sensor des Reglers diese Axialbewegung erfaßt und die Stromzufuhr zu der Spule so steuert, daß der Lagerring und damit die welle in dem Joch axial zentriert wird.

Zwar sind - wie die oben zitierten Dokumente zeigen - auch schon aktive Axiallager aus einer Kombination von elektromagnetischen Spulen und Permanentmagneten bekannt. Die hier beanspruchte Ausführungsform zeichnet sich jedoch demgegenüber durch einfache konstruktive Gestaltung - es ist nur eine Spule erforderlich - und durch hohe Kraftübertragung in axialer Richtung aus, da nur zwei Magnetspalte vorhanden sind und die Kraft/Stromcharakteristik der Spule nicht durch die Anordnung der magnetisch schlecht leitenden Permanentmagnete beeinträchtigt wird. Auf diese Weise ist das Axiallager gemäß der vorliegenden Erfindung in besonderer weise geeignet, die hohen Axialkräfte, die bei einem Turbolader auf die welle wirken, aufzufangen und gleichzeitig die welle in einer definierten Position zu halten. Dabei versteht es sich, daß radial nebeneinander auch mehrere Permanentmagnete und/oder Spulen vorgesehen sein können.

Es hat sich herausgestellt, daß man mit einem solchen aktiven Magnetlager auch hohe Axialkräfte auffangen kann, wie sie bei Abgasturboladern auftreten. Es besteht auch die Möglichkeit, das Axiallager durch zusätzliche Permanentmagnete axial so vorzuspannen, daß die durchschnittliche Axialkraft, die im Betrieb auf die Welle wirkt, durch diese Permanentmagnete aufgefangen wird und der Elektromagnet nur zum Ausgleich von über oder unter dem Durchschnittswert liegenden Axialkräften mit elektrischem Strom beaufschlagt wird. Hierdurch kann der aufzuwendende elektrische Strom für die Axialstabilisierung gering gehalten werden.

In Ausbildung der Erfindung ist vorgesehen, daß zwei Radiallager vorhanden sind, zwischen denen wenigstens ein Axiallager angeordnet ist. Dabei sollten die Radiallager innerhalb des Turboladers einen möglichst großen Abstand haben, um einen großen Hebelarm für eventuell auftretende Kippbewegungen der Welle zu haben.

Es besteht die Möglichkeit, über den Umfang des Lagerrings verteilt mehrere Axiallager der vorbeschriebenen Art anzuordnen. Konstruktiv einfacher ist es jedoch, das Axiallager als Ringlager auszubilden mit einem als Ringjoch gestalteten Joch, das den Lagerring umgibt. Dabei sind die Permanentmagnete zweckmäßigerweise als axial magnetisierte Ringmagnete und die Spule als Ringspule ausgebildet.

Um einen möglichst verlustfreien Magnetfluß zu erzeugen, sollten die Permanentmagnete an dem Joch und aneinander spaltlos anliegen. Aus dem gleichen Grund sollte die Spule an dem Joch und an den Permanentmagneten spaltlos anliegen. Damit verbleiben allein die Magnetspalte zwischen Lagerring und Joch.

Nach einem weiteren vorteilhaften Merkmal der Erfindung ist vorgesehen, daß die Permanentmagnete radial der Umfangsseite des Radialstegs benachbart sind und die Spule radial außenseitig davon sitzt. Auf diese Weise ergibt sich ein besonders günstiger Magnetfluß.

Die Radiallager sollten jeweils einen auf der Welle sitzenden Lagerring und einen diesen an zumindest einer Seite axial gegenüberliegenden Radiallagerstator aufweisen, wobei Permanentmagnete sowohl im Lagerring als auch im Radiallagerstator vorgesehen sind. Dabei sollten in radialer Richtung mehrere Permanentmagnete nebeneinander angeordnet sein, die zweckmäßigerweise an einander anliegen und abwechselnd entgegengesetzt polarisiert sind, d.h. daß jeweils zwei benachbarte Permanentmagnete am Radiallagerstator oder am Lagerring entgegengesetzt polarisiert sind. Hierdurch werden besonders hohen Magnetkräfte erzeugt.

Grundsätzlich besteht die Möglichkeit, daß die Radiallagerstatoren über den Umfang verteilt mehrere Teilstatoren mit Permanentmagneten aufweisen. Konstruktiv einfacher ist es jedoch, die Radiallagerstatoren als Ringstatoren und die Permanentmagnete als Ringmagnete auszubilden.

Grundsätzlich reicht es aus, daß jedem Lagerring nur an einer Seite ein Radiallagerstator zugeordnet ist. Dabei können die Radiallagerstatoren so angeordnet und ausgebildet sein, daß die Axialkräfte sich nicht - wie dies normalerweise der Fall ist - gegenseitig aufheben, sondern daß permanent eine Axialkraft in einer Richtung erzeugt wird, die der auf die Welle im Betrieb einwirkenden, durchschnittlichen Axialkraft entgegengesetzt gerichtet ist. Dies kann auch mit einer Ausführungsform geschehen, bei der der Lagerring an beiden Seiten von Radiallagerstatoren mit Permanentmagneten eingefaßt ist. Auf diese Weise läßt sich ein besonders kräftiger Magnetfluß erzielen, der einer radialen Auslenkung der Welle entgegenwirkt. Es versteht sich, daß die Radiallager insoweit auch unterschiedlich gestaltet werden können, d.h. daß der Lagerring des einen Radiallagers nur auf einer Seite einen Radiallagerstator aufweist, während der Lagerring des anderen Radiallagers auf beiden Seiten Radiallagerstatoren hat. Ebenso versteht es sich, daß innerhalb eines Radiallagers auch mehrere Lagerringe mit einer entsprechenden Anzahl von Radiallagerstatoren vorgesehen werden können. In diesem Fall handelt es sich lediglich um eine Reihenanordnung von mehreren Radiallagern.

Soweit zwei Radiallagerstatoren in einem Radiallager vorgesehen sind, sollten sie zweckmäßigerweise zu einem im Querschnitt U-förmigen Joch vereint sein.

Magnetlager haben die Eigenschaft, daß sie nahezu keine Dämpfung bewirken. Vorteilhafterweise ist deshalb vorgesehen, daß wenigstens ein Radiallagerstator, vorzugsweise alle Radiallagerstatoren, über Feder- und Dämpferelemente radial beweglich an einem gehäusefesten Teil des Abgasturboladers gelagert sind. Dies kann beispielsweise mittels sich axial erstreckender Biegefedern geschehen, wobei der Radiallagerstator über mehrere, über den Umfang verteilte Biegefedern mit dem gehäusefesten Teil verbunden sein kann. Dabei können die Biegefedern jeweils Teil eines Käfigs sein, der die Enden der Biegefedern über Käfigringe verbindet und einerends mit dem Radiallagerstator und andererends mit dem gehäusefesten Teil gekoppelt ist. Um eine platzsparende Ausgestaltung zu erhalten, sollte der Käfig den jeweils zugehörigen Radiallagerstator umgeben.

Zusätzlich ist es zweckmäßig, daß sich der an Federelementen aufgehängte Radiallagerstator über wenigstens ein Dämpfungselement an dem gehäusefesten Teil abstützt, das die radialen Auslenkungen der Federelemente dämpft. Dabei kann das Dämpfungselement jeweils ringförmig und koaxial zur Welle ausgebildet und entweder auf Druck oder auf Scherung beansprucht sein. In besonderer Ausgestaltung ist das Dämpfungselement als Flüssigkeitsfilm ausgebildet, vorzugsweise mit magnetischen oder magnetisierbaren Partikeln versehen, wobei der Flüssigkeitsfilm an wenigstens einer Seite über einen Permanentmagneten magnetisch beaufschlagt wird, der Teil des passiven Magnetlagers sein kann. Auf diese Weise wird der Flüssigkeitsfilm magnetisch eingefangen. Die Viskosität des Flüssigkeitsfilms kann den jeweiligen Anforderungen an die Dämpfung angepaßt werden.

In der Zeichnung ist die Erfindung anhand eines Ausführungsbeispiels näher veranschaulicht. Es zeigen:
- Figur 1: die Seitenansicht eines Abgasturboladers ohne Gehäuse mit Teilschnittdarstellung des oberen Teils der Lagerung der Welle;
- Figur 2: einen Querschnitt durch ein Radiallager des Abgasturboladers gemäß Figur 1;
- Figur 3: eine perspektivische Darstellung eines Federkäfigs für das Radiallager gemäß Figur 2;
- Figur 4: eine vergrößerte Darstellung des Axiallagers des Abgasturboladers gemäß Figur 1 und
- Figur 5: das Axiallager gemäß Figur 4 mit aktiver Beeinflussung des Magnetflusses.

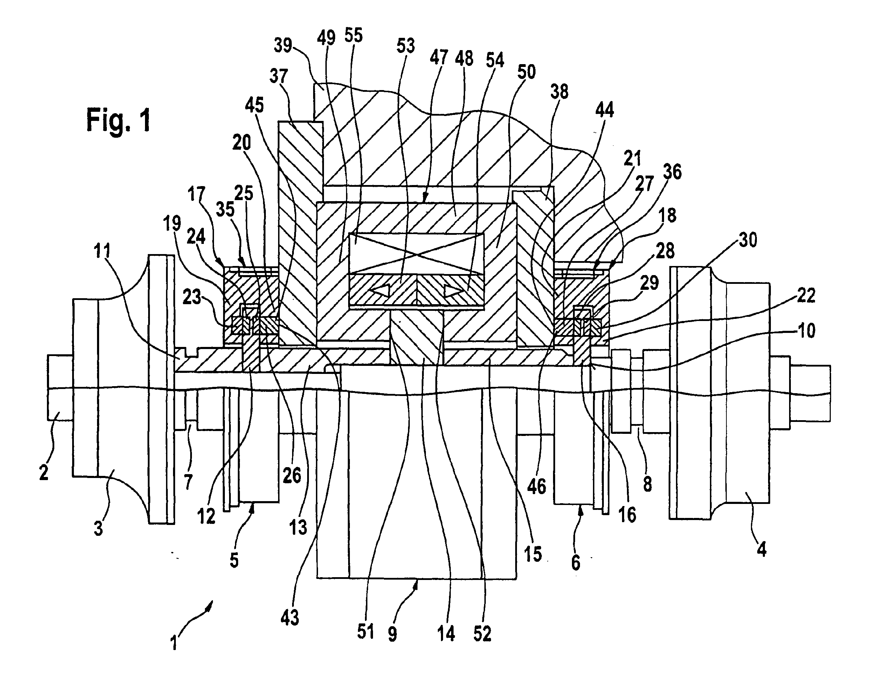

Der in Figur 1 dargestellte Abgasturbolader 1 weist eine Welle 2 auf, an deren linksseitigem Ende ein Verdichterrad 3 und an deren rechtsseitigem Ende ein Turbinenrad 4 sitzen. Das Verdichterrad 3 ist in an sich bekannter Weise als Radialverdichter ausgebildet.

Zwischen Verdichterrad 3 und Turbinenrad 4 befinden sich zwei Radiallager 5, 6. Die Radiallager 5, 6 sind dem Verdichterrad 3 bzw. dem Turborad 4 benachbart. Zwischen ihnen befinden sich Nuten 7, 8, die der Aufnahme von Dichtringen dienen, wobei sie Begrenzungslager mit einem typischen Spiel von ca. ± 0,15 mm bilden. Zwischen den Radiallagern 5, 6 befindet sich ein Axiallager 9.

Wie sich aus dem oberen Teil von Figur 1 ersehen läßt, ist die Welle 2 von insgesamt sechs Ringen umgeben, die gegen einen Bund 10 an der Welle 2 axial verspannt sind. Auf eine erste Wellenhülse 11 mit der Nut 7 folgt eine Lagerscheibe 12, eine zweite Wellenhülse 13, eine Lagerscheibe 14, eine dritte Wellenhülse 15 und eine weitere Lagerscheibe 16.

Die Lagerscheiben 12, 16 gehören zu den Radiallagern 5, 6. Sie werden jeweils beidseitig durch ein im Querschnitt U-förmiges, die Welle 2 koaxial umgebendes Joch 17, 18 eingefaßt, wobei jedes Joch 17, 18 ein Paar von Radiallagerstatoren 19, 20 bzw. 21, 22 aufweist, die die Schenkel der Joche 17, 18 bilden. Die Radiallagerstatoren 19, 20, 21, 22 und die Lagerscheiben 12, 16 weisen Permanentmagnete 23, 24, 25, 26 bzw. 27, 28, 29, 30 auf, die sich in den beiden Radiallagern 5, 6 jeweils in axialer Richtung gegenüber stehen. Sie sind so polarisiert, daß sie sich jeweils anziehen, so daß sich in den Spalten zwischen den Lagerscheiben 12, 16 und den Radiallagerstatoren 19, 20, 21, 22 ein axial gerichtetes und attrahierendes Magnetfeld ergibt. Die Magnetfelder zentrieren die Welle 2, wobei eine Radialsteifigkeit von 160 kN/m erreicht wird.

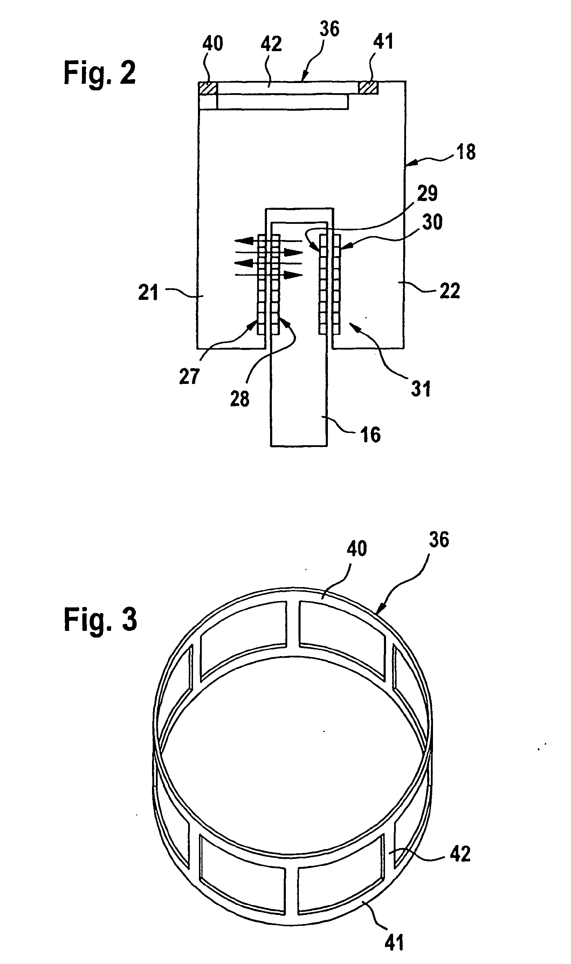

Die Permanentmagnete 23 bis 30 bestehen jeweils aus neun koaxial ineinander gesetzten Ringmagneten - beispielhaft mit 31 bezeichnet -, wie aus der vergrößerten Darstellung des Radiallagers 6 in Figur 2 zu ersehen ist. Die Ringmagnete 31 eines Permanentmagneten 23 bis 30 liegen in radialer Richtung aneinander an. Zwei in radialer Richtung benachbarte Ringmagnete 31 sind entgegengesetzt axial magnetisiert. Die in axialer Richtung gegenüberliegenden Ringmagnete 31 von zwei benachbarten Permanentmagneten 23 bis 30 sind sich gegenseitig anziehend polarisiert, so daß ein axialer Magnetfluß entsteht.

Die Joche 17, 18 werden außenseitig von Federkäfigen 35, 36 umgeben (im unteren Teil von Figur 1 weggelassen) die am außenseitigen Rand mit den Jochen 17, 18 und am innenseitigen Rand mit Gehäusescheiben 37, 38 (im unteren Teil von Figur 1 weggelassen) verbunden sind, welche wiederum an einem Gehäuse 39 fixiert sind. Der Federkäfig 36 ist in Figur 3 im einzelnen dargestellt. Randseitig hat er zwei Käfigringe 40, 41, die über acht gleichmäßig verteilte, sich in Axialrichtung erstreckende Federstreben - beispielhaft mit 42 bezeichnet - verbunden sind. Die Federstreben 42 erlauben eine gegenseitige Parallelverschiebung der beiden Käfigringe 40, 41, wobei sich die Federstreben 42 in radialer Richtung verbiegen. Die Joche 17, 18 können also radial auslenken.

Zwischen den Jochen 17, 18 und den Gehäusescheiben 37, 38 befinden sich schmale Spalte, in denen jeweils ein Dämpfungsring 43, 44 vorgesehen ist (Figur 1). Die Dämpfungsringe 43, 44 bestehen aus einem hoch viskosen und mit magnetischen Partikeln versetzten Flüssigkeitsfilm. Der Flüssigkeitsfilm wird bei einer radialen Bewegung der Joche 17, 18 auf Scherung beansprucht und wirkt auf diese Weise dämpfend. Er wird durch Ringmagnete 45, 46 in den Jochen 17, 18 eingefangen.

Die Lagerscheibe 14 gehört zu dem Axiallager 9. Sie wird beidseitig von einem Ringjoch 47 aus geblechtem Si-Eisen eingefaßt. Das Ringjoch 47 ist zwischen den beiden Gehäusescheiben 37, 38 eingefaßt und fixiert. Es hat einen äußeren Jochmantel 48, von dem zwei nach innen gerichtete Jochschenkel 49, 50 ausgehen, die L-förmigen Querschnitt haben und mit gegeneinander gerichteten Schenkelabschnitten die Lagerscheibe 14 einfassen, wobei zwei Magnetspalte 51, 52 entstehen. Der Umfangsseite der Lagerscheibe 14 benachbart befinden sich innerhalb des Ringjochs 47 zwei axial nebeneinander liegende Permanentmagnete 53, 54, welche - symbolisiert durch die Dreiecke - entgegengesetzt axial polarisiert sind. Sie liegen aneinander und an den Jochschenkeln 49, 50 an. Sie werden von einer elektromagnetischen Ringspule 55 umgeben, die den Raum zwischen den Permanentmagneten 53, 54 sowie dem Jochmantel 48 und den Jochschenkeln 49; 50 ausfüllt.

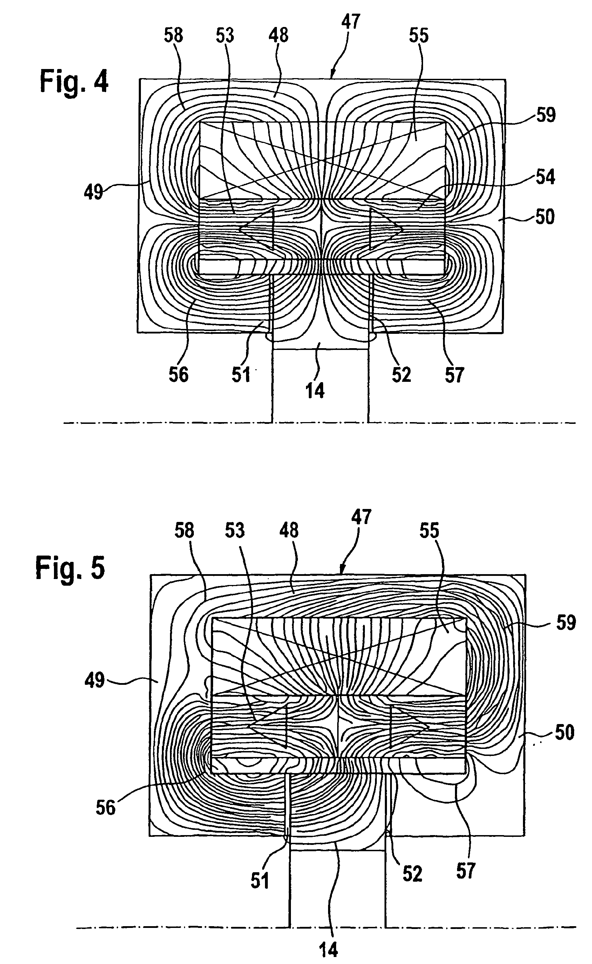

Wie insbesondere aus Figur 4 zu ersehen ist, werden durch die beiden Permanentmagnete 53, 54 insgesamt vier Magnetteilflüsse 56, 57, 58, 59 erzeugt, wobei jeweils benachbarte Magnetteilflüsse 56, 57, 58, 59 entgegengesetzt gerichtet sind. Die innenseitigen Magnetteilflüsse 56, 57 bilden in den Magnetspalten 51, 52 axial gerichtete Magnetflüsse aus, so daß sich die einander gegenüber liegenden Flächen in den Magnetspalten 51, 52 gegenseitig anziehen. In der Mittellage der Lagerscheibe 14 heben sich die Magnetkräfte auf. Die außenseitigen Magnetteilflüsse 58, 59 gehen über die Jochschenkel 49, 50 in den Jochmantel 48 und von dort über die Ringspule 55 wieder in die Ringmagnete 45, 46.

Aufgrund der magnetischen Instabilität der Welle 2 in axialer Richtung muß über das Axiallager 9 eine axiale Stabilisierung bewirkt werden. Dies geschieht bei einer axialen Auslenkung der Lagerscheibe 14 dadurch, daß diese Auslenkung von einem hier nicht näher dargestellten, im Stand der Technik bekannten Sensor erfaßt wird und hierdurch der ebenfalls nicht dargestellte Regler den Stromzufluß zu der Ringspule 55 so steuert, daß ein zusätzlicher Magnetfluß erzeugt wird, der insgesamt zu einer asymmetrischen Magnetflußverteilung innerhalb des Axiallagers 9 führt. Dies ist aus Figur 5 zu ersehen. In diesem Fall liegt eine minimale Auslenkung der Lagerscheibe 14 nach rechts vor. Hierdurch wird die Ringspule 55 durch einen elektrischen Strom beaufschlagt, der eine solche Richtung hat, daß die diagonal gegenüber liegenden Magnetteilflüsse 56, 59 verstärkt - symbolisiert durch die dichteren Flußlinien - und die anderen Magnetteilflüsse 57, 58 abgeschwächt werden. Hierdurch erhöht sich die anziehende Kraft im linken Magnetspalt 51, während sich die Magnetkraft im rechten Magnetspalt 52 abschwächt. Der axialen Auslenkung der Lagerscheibe 14 nach rechts wird also eine magnetische Anziehungskraft in axialer Richtung entgegengesetzt mit der Folge, daß die Lagerscheibe 14 in Bezug auf das Ringjoch 47 wieder zentriert wird.

## Patentansprüche

1. Abgasturbolader (1) mit einer welle (2), auf der ein Turborad (4) und ein verdichterrad (3) sitzen und die in Radiallagern (5, 6) und wenigstens einem Axiallager (9) geführt ist, die als Magnetlager ausgebildet sind, wobei das Axiallager (9) als aktives Magnetlager mit einem Elektromagneten (55), einem Axialsensor und einem Regler zur Regelung des den Elektromagneten (55) beaufschlagenden elektrischen Stroms ausgebildet sind, **dadurch gekennzeichnet, daß** die Radiallager (5, 6) als passive Magnetlager mit axiale Magnetflüsse erzeugenden Permanentmagneten (23 bis 31) und das Axiallager (9) einen auf der welle (2) sitzenden, radial vorstehenden Lagerring (14) aus magnetisierbarem Material und wenigstens ein einen Axiallagerstator bildendes Joch (47) aus ferromagnetischem Material aufweist, das den Lagerring (14) unter Bildung von Magnetspalten (51, 52) auf beiden Seiten einfaßt, und daß in dem Joch (47) axial nebeneinander wenigstens ein Paar von axial entgegengesetzt polarisierten Permanentmagneten (53, 54) und ferner radial benachbart als Elektromagnet eine elektromagnetische Spule (55) angeordnet sind, wobei der Magnetfluß in der Spule (55) und damit in den Magnetspalten (51, 52) über den Regler derart steuerbar ist, daß der Lagerring (14) in dem Joch (47) axial in einer definierten Position gehalten wird.

2. Abgasturbolader nach Anspruch 1, **dadurch gekennzeichnet, daß** zwei Radiallager (5, 6) vorhanden sind, zwischen denen wenigstens ein Axiallager (9) angeordnet ist.

3. Abgasturbolader nach Anspruch 1 oder 2, **dadurch gekennzeichnet, daß** über den Umfang des Lagerrings (14) verteilt mehrere Axiallager vorgesehen sind.

4. Abgasturbolader nach Anspruch 1 oder 2, **dadurch gekennzeichnet, daß** das Axiallager (9) als Ringlager ausgebildet ist.

5. Abgasturbolader nach Anspruch 4, **dadurch gekennzeichnet, daß** das Joch als Ringjoch (47) ausgebildet ist, das den Lagerring (14) umgibt.

6. Abgasturbolader nach Anspruch 5, **dadurch gekennzeichnet, daß** die Permanentmagnete (53, 54) als Ringmagnete und die Spule als Ringspule (55) ausgebildet sind.

7. Abgasturbolader nach einem der Ansprüche 1 bis 6, **dadurch gekennzeichnet, daß** die Permanentmagnete (53, 54) an dem Joch (47) anliegen.

8. Abgasturbolader nach einem der Ansprüche 1 bis 7, **dadurch gekennzeichnet, daß** die Permanentmagnete (53, 54) aneinander anliegen.

9. Abgasturbolader nach einem der Ansprüche 1 bis 8, **dadurch gekennzeichnet, daß** die Spule (55) an dem Joch (47) anliegt.

10. Abgasturbolader nach einem der Ansprüche 1 bis 9, **dadurch gekennzeichnet, daß** die Spule (55) an den Permanentmagneten (53, 54) anliegt.

11. Abgasturbolader nach einem der Ansprüche 1 bis 10, **dadurch gekennzeichnet, daß** die Permanentmagnete (53, 54) radial der Umfangsseite des Lagerrings (14) benachbart sind und die Spule (55) radial außenseitig davon sitzt.

12. Abgasturbolader nach einem der Ansprüche 1 bis 11, **dadurch gekennzeichnet, daß** die Radiallager jeweils einen auf der welle (2) sitzenden Lagerring (12, 16) und wenigstens einen diesen an zumindest einer Seite axial gegenüberliegenden Radiallagerstator (19 bis 22) aufweisen, wobei die Permanentmagnete (23 bis 31) sowohl an den Lageringen (12, 16) als auch an den Radiallagerstatoren (19 bis 22) vorgesehen sind.

13. Abgasturbolader nach Anspruch 12, **dadurch gekennzeichnet, daß** in radialer Richtung mehrere Permanentmagnete (31) nebeneinander angeordnet sind.

14. Abgasturbolader nach Anspruch 13, **dadurch gekennzeichnet, daß** die Permanentmagnete (31) am Radiallagerstator (19 bis 22) und am Lagerring (12, 16) in radialer Richtung aneinander anliegen.

15. Abgasturbolader nach Anspruch 13 oder 14, **dadurch gekennzeichnet, daß** in radialer Richtung jeweils zwei benachbarte Permanentmagnete (31) entgegengesetzt polarisiert sind.

16. Abgasturbolader nach einem der Ansprüche 12 bis 15, **dadurch gekennzeichnet, daß** die Radiallagerstatoren über den Umfang verteilt mehrere Teilstatoren mit Permanentmagneten aufweisen.

17. Abgasturbolader nach einem der Ansprüche 12 bis 15, **dadurch gekennzeichnet, daß** die Radiallagerstatoren (19 bis 22) als Ringstatoren und die Permanentmagnete (23 bis 31) als Ringmagnete ausgebildet sind.

18. Abgasturbolader nach einem der Ansprüche 12 bis 17, **dadurch gekennzeichnet, daß** jeweils der Lagerring (12, 16) an beiden Seiten von Radiallagerstatoren (19 bis 22) eingefaßt ist.

19. Abgasturbolader nach Anspruch 18, **dadurch gekennzeichnet, daß** jeweils zwei Radiallagerstatoren (19 bis 22) zu einem im Querschnitt U-förmigen Joch (17, 18) vereint sind.

20. Abgasturbolader nach einem der Ansprüche 12 bis 19, **dadurch gekennzeichnet, daß** wenigstens ein Radiallagerstator (19 bis 22) über Feder- und Dämpferelemente (35, 36; 40 bis 44) an einem gehäusefesten Teil (37, 38, 39) des Abgasturboladers (1) gelagert ist.

21. Abgasturbolader nach Anspruch 20, **dadurch gekennzeichnet, daß** die Federelemente (35, 36; 40, 41, 42) als sich axial erstreckende Biegefedern (42) ausgebildet sind.

22. Abgasturbolader nach Anspruch 21, **dadurch gekennzeichnet, daß** jeder Radiallagerstator (19 bis 22) über mehrere, über den umfang verteilte Biegefedern (42) mit dem gehäusefesten Teil (37, 38, 39) verbunden ist.

23. Abgasturbolader nach Anspruch 22, **dadurch gekennzeichnet, daß** die Biegefedern (42) jeweils Teil eines Käfigs (35, 36) sind, der die Enden der Biegefedern (42) über Käfigringe (40, 41) verbindet.

24. Abgasturbolader nach Anspruch 23, **dadurch gekennzeichnet, daß** der Käfig (35, 36) jeweils die Radiallagerstatoren (19 bis 22) umgibt.

25. Abgasturbolader nach einem der Ansprüche 22 bis 23, **dadurch gekennzeichnet, daß** der bzw. die Radiallagerstatoren (19 bis 22) sich über wenigstens ein Dämpfungselement (43, 44) an dem gehäusefesten Teil (37, 38, 39) abstützen.

26. Abgasturbolader nach Anspruch 25, **dadurch gekennzeichnet, daß** das Dämpfungselement (43, 44) ringförmig und koaxial zur Welle (2) ausgebildet ist.

27. Abgasturbolader nach Anspruch 25 oder 26, **dadurch gekennzeichnet, daß** die Dämpfungselemente (43, 44) als Flüssigkeitsfilme ausgebildet sind.

28. Abgasturbolader nach Anspruch 27, **dadurch gekennzeichnet, daß** die Flüssigkeitsfilme (43, 44) magnetische oder magnetisierbare Partikel enthalten und wenigstens an einer Seite über einen Permanentmagneten (45, 46) magnetisch beaufschlagt sind.

29. Abgasturbolader nach Anspruch 28, **dadurch gekennzeichnet, daß** die Permanentmagnete (45, 46) Teil der Radiallager (5, 6) sind.

## Claims

1. An exhaust gas turbocharger (1) having a shaft (2) on which a turbine wheel (4) and a compressor wheel (3) sit and which is guided in radial bearings (5, 6) and in at least one axial bearing (9), which are embodied as magnet bearings, wherein the axial bearing (9) is embodied as an active magnetic bearing having an electromagnet (55), an axial sensor, and a controller for controlling the electrical current impinging upon the electromagnet (55),
**characterized in that** the radial bearings (5, 6) are embodied as passive magnetic bearings having permanent magnets (23 through 31) generating axial magnetic fluxes and the axial bearing (9) has a radially projecting bearing ring (14), sitting on the shaft (2) and made of magnetizable material, and at least one yoke (47), made of ferromagnetic material and forming at least one axial bearing stator, that encloses the bearing ring (14) forming magnetic gaps (51, 52); and that at least one pair of axially oppositely polarized permanent magnets (53, 54) are arranged axially next to one another in the yoke (47), and an electromagnetic coil (55) is also arranged radially adjacently as electromagnet, the magnetic flux in the coil (55) and thus in the magnetic gaps (51, 52) being controllable by way of the controller in such a way that the bearing ring (14) is held in the yoke (47) axially in a defined position.

2. The exhaust gas turbocharger as defined in Claim 1, wherein two radial bearings (5, 6) are present, between which at least one axial bearing is arranged.

3. The exhaust gas turbocharger as defined in Claim 1 or 2, wherein several axial bearings are provided, distributed over the circumference of the bearing ring (14).

4. The exhaust gas turbocharger as defined in Claim 1 or 2, wherein the axial bearing (9) is embodied as an annular bearing.

5. The exhaust gas turbocharger as defined in Claim 4, wherein the yoke is configured as an annular yoke (47) that surrounds the bearing ring (14).

6. The exhaust gas turbocharger as defined in Claim 5, wherein the permanent magnets (53, 54) are embodied as annular magnets, and the coil as an annular coil (55).

7. The exhaust gas turbocharger as defined in any of Claims 1 through 6, wherein the permanent magnets (53, 54) are in contact against the yoke (47).

8. The exhaust gas turbocharger as defined in any of Claims 1 through 7, wherein the permanent magnets (53, 54) are in contact against each other.

9. The exhaust gas turbocharger as defined in any of Claims 1 through 8, wherein the coil (55) is in contact against the yoke (47).

10. The exhaust gas turbocharger as defined in any of Claims 1 through 9, wherein the coil (55) is in contact against the permanent magnets (53, 54).

11. The exhaust gas turbocharger as defined in any of Claims 1 through 10, wherein the permanent magnets (53, 54) are radially adjacent to the circumferential side of the radial ring (14), and the coil (55) sits on the radially outward side thereof.

12. The exhaust gas turbocharger as defined in any of Claims 1 through 11, wherein the radial bearings each have a bearing ring (12, 16) sitting on the shaft (2), and at least one radial bearing stator (19 through 22) located axially opposite that ring on at least one side, the permanent magnets (23 through 31) being provided both on the bearing rings (12, 16) and on the radial bearing stators (19 through 22).

13. The exhaust gas turbocharger as defined in Claim 12, wherein several permanent magnets (31) are arranged next to one another in the radial direction.

14. The exhaust gas turbocharger as defined in Claim 13, wherein the permanent magnets (31) on the radial bearing stator (19 through 22) and bearing ring (12, 16) are in contact with one another in the radial direction.

15. The exhaust gas turbocharger as defined in Claim 13 or 14, wherein each two adjacent permanent magnets (31) in the radial direction are oppositely polarized.

16. The exhaust gas turbocharger as defined in any of Claims 12 through 15, wherein the radial bearing stators have several partial stators, with permanent magnets, distributed over the circumference.

17. The exhaust gas turbocharger as defined in any of Claims 12 through 15, wherein the radial bearing stators (19 through 22) are embodied as annular stators and the permanent magnets (23 through 31) as annular magnets.

18. The exhaust gas turbocharger as defined in any of Claims 12 through 17, wherein each bearing ring (12, 16) is enclosed on both sides by radial bearing stators (19 through 22).

19. The exhaust gas turbocharger as defined in Claim 18, wherein each two radial bearing stators (19 through 22) are combined into a yoke (17, 18) that is U-shaped in cross section.

20. The exhaust gas turbocharger as defined in any of Claims 12 through 19, wherein at least one radial bearing stator (19 through 22) is supported via spring and damper elements (35, 36; 40 through 44) on a housing-mounted part (37, 38, 39) of the exhaust gas turbocharger (1).

21. The exhaust gas turbocharger as defined in Claim 20; wherein the spring elements (35, 36; 40, 41, 42) are embodied as axially extending torsion springs (42).

22. The exhaust gas turbocharger as defined in Claim 21, wherein each radial bearing stator (19 through 22) is connected to the housing-mounted part (37, 38, 39) via torsion springs (42) distributed over the circumference.

23. The exhaust gas turbocharger as defined in Claim 22, wherein the torsion springs (42) are each part of a cage (35, 36) that connects the ends of the torsion springs (42) via cage rings (40, 41).

24. The exhaust gas turbocharger as defined in Claim 23, wherein the cage (35, 36) surrounds the respective radial bearing stators (19 through 22).

25. The exhaust gas turbocharger as defined in any of Claims 20 through 23, wherein the radial bearing stator or stators (19 through 22) are braced against the housing-mounted part (37, 38, 39) by way of at least one damping element (43, 44).

26. The exhaust gas turbocharger as defined in Claim 25, wherein the damping element (43, 44) is embodied annularly and coaxially with respect to the shaft (2).

27. The exhaust gas turbocharger as defined in Claim 25 or 26, wherein the damping elements (43, 44) are embodied as liquid films.

28. The exhaust gas turbocharger as defined in Claim 27, wherein the liquid films (43, 44) contain magnetic or magnetizable particles and are magnetically impinged upon on at least one side by a permanent magnet (45, 46).

29. The exhaust gas turbocharger as defined in Claim 28, wherein the permanent magnets (45, 46) are part of the radial bearings (5, 6).

## Revendications

1. Turbocompresseur à gaz d'échappement (1) avec un arbre (2) sur lequel sont montées une roue de turbo (4) et une roue de compresseur (3) et qui est guidé dans des paliers radiaux (5, 6) et au moins un palier axial (9) qui sont réalisés sous la forme de paliers magnétiques, le palier axial (9) étant réalisé sous la forme d'un palier magnétique actif avec un électroaimant (55), un capteur axial et un régulateur pour la régulation du courant électrique alimentant l'électroaimant (55), **caractérisé par le fait que** les paliers radiaux (5, 6) sont réalisés sous la forme de paliers magnétiques passifs avec des aimants permanents (23 à 31) générant des flux magnétiques axiaux et que le palier axial (9) présente une bague de palier (14) en matériau magnétisable, en saillie radiale, montée sur l'arbre (2) et au moins une culasse (47) en matériau ferromagnétique formant un stator de palier axial qui entoure la bague de palier (14) des deux côtés en formant des entrefers magnétiques (51, 52), et que dans la culasse (47) sont disposées côte à côte axialement au moins une paire d'aimants permanents (53, 54) polarisés en sens inverse axialement ainsi que radialement à leur voisinage une bobine électromagnétique (55) utilisée comme électroaimant, le flux magnétique dans la bobine (55) et par conséquent dans les entrefers magnétiques (51, 52) étant commandable au moyen du régulateur de telle manière que la bague de palier (14) soit maintenue axialement dans une position définie dans la culasse (47).

2. Turbocompresseur à gaz d'échappement selon la revendication 1, **caractérisé par le fait qu'**il existe deux paliers radiaux (5, 6) entre lesquels est disposé au moins un palier axial (9).

3. Turbocompresseur à gaz d'échappement selon la revendication 1 ou 2, **caractérisé par le fait qu'**il est prévu plusieurs paliers axiaux répartis sur la circonférence de la bague de palier (14).

4. Turbocompresseur à gaz d'échappement selon la revendication 1 ou 2, **caractérisé par le fait que** le palier axial (9) est réalisé sous la forme d'un palier annulaire.

5. Turbocompresseur à gaz d'échappement selon la revendication 4, **caractérisé par le fait que** la culasse est réalisée sous la forme d'une culasse annulaire (47) qui entoure la bague de palier (14).

6. Turbocompresseur à gaz d'échappement selon la revendication 5, **caractérisé par le fait que** les aimants permanents (53, 54) sont réalisés sous la forme d'aimants annulaires et la bobine sous la forme d'une bobine toroïdale (55).

7. Turbocompresseur à gaz d'échappement selon l'une des revendications 1 à 6, **caractérisé par le fait que** les aimants permanents (53, 54) sont en contact avec ou s'appuient sur la culasse (47).

8. Turbocompresseur à gaz d'échappement selon l'une des revendications 1 à 7, **caractérisé par le fait que** les aimants permanents (53, 54) sont en contact l'un avec l'autre ou s'appuient l'un sur l'autre.

9. Turbocompresseur à gaz d'échappement selon l'une des revendications 1 à 8, **caractérisé par le fait que** la bobine (55) est en contact avec ou s'appuie sur la culasse (47).

10. Turbocompresseur à gaz d'échappement selon l'une des revendications 1 à 9, **caractérisé par le fait que** la bobine (55) est en contact avec ou s'appuie sur les aimants permanents (53, 54).

11. Turbocompresseur à gaz d'échappement selon l'une des revendications 1 à 10, **caractérisé par le fait que** les aimants permanents (53, 54) sont radialement voisins de la face circonférentielle de la bague de palier (14) et que la bobine (55) est montée radialement vers l'extérieur par rapport à celle-ci.

12. Turbocompresseur à gaz d'échappement selon l'une des revendications 1 à 11, **caractérisé par le fait que** les paliers radiaux présentent chaque fois une bague de palier (12, 16) montée sur l'arbre (2) et au moins un stator de palier radial (19 à 22) axialement opposé à celle-ci sur au moins un côté, les aimants permanents (23 à 31) étant prévus aussi bien sur les bagues de palier (12, 16) que sur les stators de palier radial (19 à 22).

13. Turbocompresseur à gaz d'échappement selon la revendication 12, **caractérisé par le fait que** plusieurs aimants permanents (31) sont disposés côte à côte en direction radiale.

14. Turbocompresseur à gaz d'échappement selon la revendication 13, **caractérisé par le fait que** les aimants permanents (31) sont en contact les uns avec les autres ou s'appuient les uns sur les autres en direction radiale sur le stator de palier radial (19 à 22) et sur la bague de palier (12, 16).

15. Turbocompresseur à gaz d'échappement selon la revendication 13 ou 14, **caractérisé par le fait que** chaque fois deux aimants permanents (31) voisins en direction radiale sont polarisés en sens inverse.

16. Turbocompresseur à gaz d'échappement selon l'une des revendications 12 à 15, **caractérisé par le fait que** les stators de palier radial présentent, répartis sur la circonférence, plusieurs sous-stators avec des aimants permanents.

17. Turbocompresseur à gaz d'échappement selon l'une des revendications 12 à 15, **caractérisé par le fait que** les stators de palier radial (19 à 22) sont réalisés sous la forme de stators annulaires et les aimants permanents (23 à 31) sous la forme d'aimants annulaires.

18. Turbocompresseur à gaz d'échappement selon l'une des revendications 12 à 17, **caractérisé par le fait que** chaque bague de palier (12, 16) est entourée des deux côtés de stators de palier radial (19 à 22).

19. Turbocompresseur à gaz d'échappement selon la revendication 18, **caractérisé par le fait que** chaque fois deux stators de palier radial (19 à 22) sont réunis en une culasse (17, 18) à section en U.

20. Turbocompresseur à gaz d'échappement selon l'une des revendications 12 à 19, **caractérisé par le fait qu'**au moins un stator de palier radial (19 à 22) est monté par l'intermédiaire d'éléments élastiques et amortisseurs (35, 36 ; 40 à 44) sur une partie liée au boîtier du turbocompresseur à gaz d'échappement (1).

21. Turbocompresseur à gaz d'échappement selon la revendication 20, **caractérisé par le fait que** les éléments élastiques (35, 36 ; 40, 41, 42) sont réalisés sous la forme de ressorts de flexion (42) s'étendant axialement.

22. Turbocompresseur à gaz d'échappement selon la revendication 21, **caractérisé par le fait que** chaque stator de palier radial (19 à 22) est relié à la partie liée au boîtier (37, 38, 39) par plusieurs ressorts de flexion (42) répartis sur la circonférence.

23. Turbocompresseur à gaz d'échappement selon la revendication 22, **caractérisé par le fait que** les ressorts de flexion (42) font partie d'une cage (35, 36) qui relie les extrémités des ressorts de flexion (42) par des bagues de cage (40, 41).

24. Turbocompresseur à gaz d'échappement selon la revendication 23, **caractérisé par le fait que** la cage (35, 36) entoure chaque fois les stators de palier radial (19 à 22).

25. Turbocompresseur à gaz d'échappement selon l'une des revendications 22 à 23, **caractérisé par le fait que** le ou les stator(s) de palier radial (19 à 22) s'appuient ou reposent sur la partie liée au boîtier (37, 38, 39) par au moins un élément amortisseur (43, 44).

26. Turbocompresseur à gaz d'échappement selon la revendication 25, **caractérisé par le fait que** l'élément amortisseur (43, 44) est réalisé en forme d'anneau et coaxial à l'arbre (2).

27. Turbocompresseur à gaz d'échappement selon la revendication 25 ou 26, **caractérisé par le fait que** les éléments amortisseurs (43, 44) sont réalisés sous la forme de films liquides.

28. Turbocompresseur à gaz d'échappement selon la revendication 27, **caractérisé par le fait que** les films liquides (43, 44) contiennent des particules magnétiques ou magnétisables et sont soumis au moins sur un côté au champ magnétique d'un aimant permanent (45, 46).

29. Turbocompresseur à gaz d'échappement selon la revendication 28, **caractérisé par le fait que** les aimants permanents (45, 46) font partie ou sont des éléments des paliers radiaux (5, 6).
